# EUROPEAN PATENT SPECIFICATION

(11) **EP 0 404 006 B1**
(45) Date of publication and mention of the grant of the patent: **07.12.1994**
(21) Application number: 90111433.0
(22) Date of filing: 18.06.1990
(51) Int. Cl.: F16H 19/04, B66F 3/04

(54) **Rack and pinion lifter**
Zahnstangenhubvorrichtung
Dispositif élévateur à pignon et crémaillère

(30) Priority: 23.06.1989 US 372427; 21.02.1990 US 483069
(43) Date of publication of application: 27.12.1990
(73) Proprietor: POWER COMPONENTS, INC., Redford, Michigan 48239 (US)
(72) Inventor: Cotter, Patrick J., Plymouth, Michigan 48170 (US)
(74) Representative: Blumbach, Kramer & Partner

(56) References cited:
- EP-A- 0 121 062
- GB-A- 2 116 646
- US-A- 3 447 388

## Description

This invention relates to an actuator apparatus comprising the features as defined in the preamble of claim 1 and known from US-A 3 447 388. The pinion gears of this US-A 3 447 388 each have a pair of undercuts, in which the flanges of the bearings and a retainer ring engages to support and mount said pinion gear. These undercuts may result in a weakening of the wall between root and gear bore so that in operation there may be a bending force onto each tooth which may create tensile stresses onto each root and thus the danger of cracks at these roots along the weakened lengths of the wall.

Various further actuator and lifter devices with rack and pinion gearing have been previously used for many different applications, including conveying and transferring workpieces, lifting formed sheet metal parts from stamping dies, and the like. In many applications, it is necessary that the actuator device be compact and small relative to its load bearing capabilities.

One such further compact lifting device with an actuator rack driven by a pinion gear is shown in US-A 3 400 593. A plurality of these devices may be linked together to drive their respective racks in unison by a non-circular connecting shaft removably engagable with the pinion gear for rotation in unison therewith. This arrangement also enables the racks to be positioned at a desired location with respect to a common reference plane before the devices are operably linked together by the non-circular connecting shaft. If desired, a single device can have a plurality of racks each with an associated separate pinion with all of the pinions of the device being operably coupled together by a non-circular shaft so that the racks will be driven in unison.

With this compact lifting device, problems have been experienced with the durability, strength and load bearing capacity or capability of the bearings and pinion gears, and particularly with pinion gears having a pitch diameter of less than about two inches. In use, these pinion gears are susceptible to permanent deformation, distortion, cracking, and fracturing, have a relatively short useful life and require considerable service, maintenance and replacement. Moreover, when they fail they frequently damage other components of the device which also then require replacement or scrapping of the entire device.

Moreover, problems have been experienced with the lubrication, durability and wearability of the bearings for the rack which frequently resulted in bearing failure after only a few thousand cycles of the lifting device.

Objects, features and advantages of this invention are to provide an actuator device with a relatively high working load capacity and which is compact, extremely durable, rugged, of simplified design, manufacture and assembly, and in use requires relatively little service and maintenance and has a long useful life.

These problems are solved by the invention as defined in claim 1.

In an actuator device of this invention, to enhance its strength, load bearing capability and durability, each pinion gear has an annual peripheral recess forming a shoulder in each of its side faces which receives a rim of an annular ring, bushing or other supporting element for journalling each pinion gear for rotation on its axis in mesh with an actuator rack slidably received in a housing to advance and retract the rack. Preferably, the teeth of the pinion gear extend continuously generally axially between its side faces, the shoulders are in the peripheral edges of the teeth, and the radial extent of each shoulder is less than the radial extent of its associated teeth.

Each pinion gear is driven by a non-circular and preferably square shaft slidably and removably received in a complementary non-circular central hole through the pinion gear. Preferably, the bushings supporting the gear also have a complimentary non-circular central hole through which the shaft is slidably and removably received.

Preferably, each rack and pinion gear is permanently lubricated preferably with a graphite lubricant and the racks are journalled in hard bronze bearings to greatly increase the useful life of the lifting device. These bearings and permanent lubrication dramatically increase the in service useful life of the lifting device to for the applicable load, cycle rate and installation.

### Brief Description of the Drawings

These and other objects, features and advantages of this invention will be apparent from the following detailed description, appended claims and accompanying drawings in which:
FIG. 1 is a perspective view of a pair of devices embodying this invention operably coupled together by a square shaft;
FIG. 2 is a sectional view of the device with two actuator racks of FIG. 1;
FIG. 3 is a side view of a pinion gear of the device;
FIG. 4 is a sectional view of the pinion gear taken on line 4-4 of FIG. 3.
FIG. 5 is a side view of a hub of the device;
FIG. 6 is a sectional view of the hub taken on line 6-6 of FIG. 5;
FIG. 7 is a side view of a spacer ring of the device; and
FIG. 8 is a sectional view of the device with one actuator rack of FIG. 1.
FIG. 9 is a sectional view of a modified two-rack device embodying this invention which illustrates the bearings for one rack and permanent lubrication of this rack and its associated pinion gear;
FIG. 10 is another sectional view of the modified embodiment of FIG. 9 which illustrates the bearings for its other rack and permanent lubrication of the other rack and its associated pinion gear;
FIG. 11 is an enlarged fragmentary view of a portion of FIG. 9; and
FIG. 12 is a fragmentary view taken generally on line 12-12 of FIG. 11.

### Detailed Description

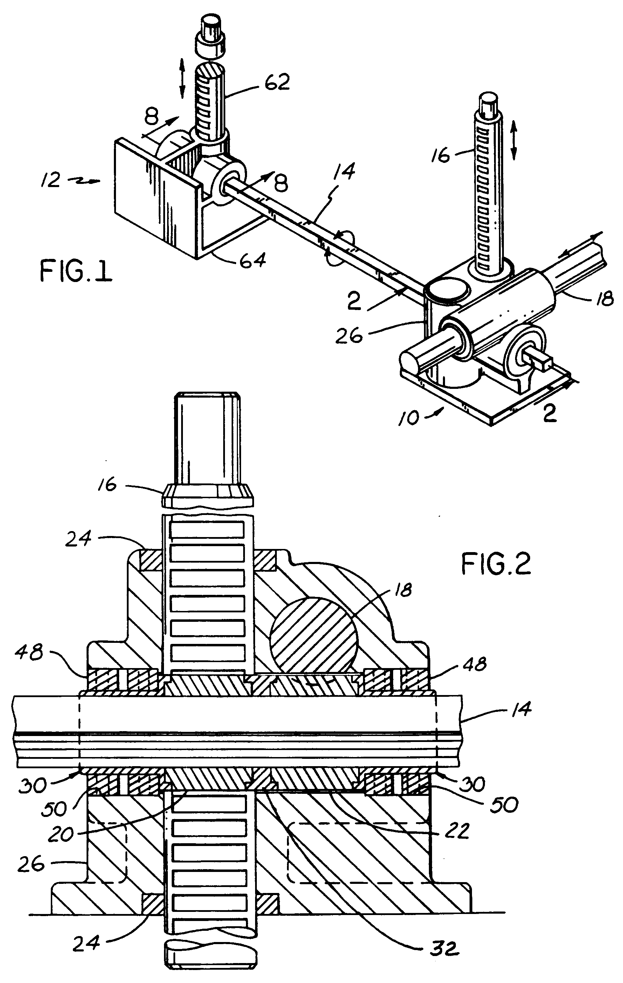

Referring in more detail to the drawings, FIG. 1 illustrates two actuator devices 10 and 12 embodying this invention and releasably coupled for operation in unison by a square shaft 14. As shown in FIGS. 1 & 2, the device 10 has a pair of actuator racks 16 and 18 which in assembly mesh with complimentary pinion gears 20 and 22 which preferably are identical. Preferably, the racks extend vertically and horizontally at a right angle to each other. Each rack is slidably received and journalled by a pair of bearings 24 in a housing 26 for reciprocation along its axis.

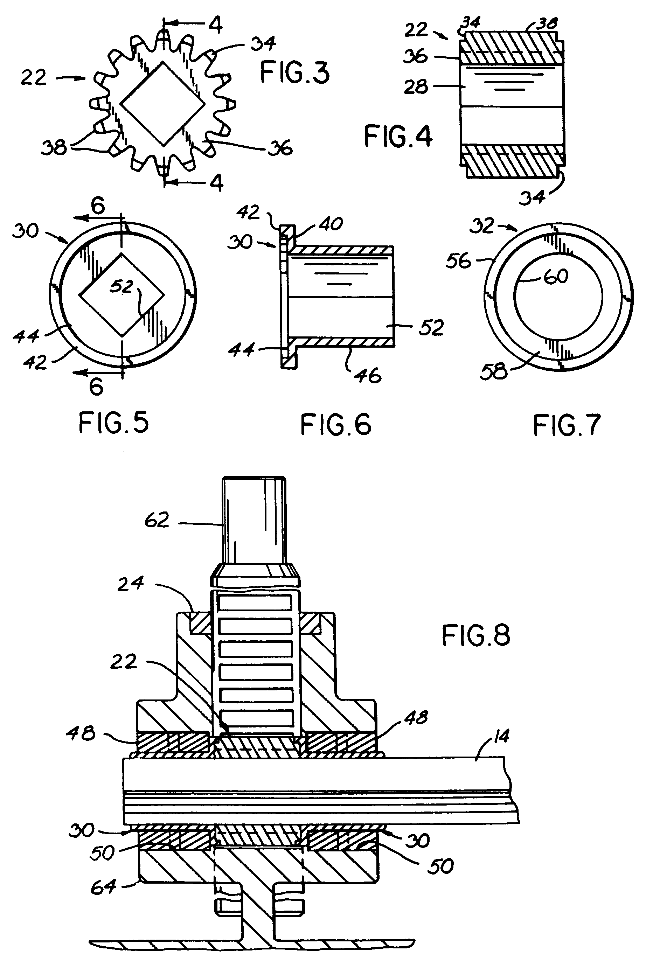

To permit the initial positions of the racks to be varied and adjusted with respect to each other, and with respect to similar racks in other similar actuator devices, the pinion gears and the shaft 14 are constructed and arranged so the gears can be rotated independently of each other when the shaft is disengaged from the gears. When it is desired to operate the racks together, the pinion gears can be coupled to rotate in unison by the shaft. This is accomplished by providing non-circular and preferably square axial holes 28 (Figs. 3 & 4) through the gears which when aligned can slidably receive the complimentary non-circular and preferably square shaft 14.

In accordance with this invention, to provide a device of increased strength and durability, the pinion gears are journalled for rotation by a pair of bushings 30 and a spacer ring 32 which overlap and engage peripheral portions of both edges of each gear. As shown in FIGS. 2-4, each pinion gear in each side face has an annular peripheral recess or shoulder 34 and a central pilot or hub 36 projecting axially and extending radially between the shoulder and the central square through holes. Preferably, the gear teeth 38 extend between the side faces and the shoulders are formed in the edges of the teeth. Preferably, the radial height or extent of each shoulder 34 is less than the radial height or depth of the teeth 38 of the gear.

As shown in FIGS. 2, 5 and 6, each bushing 30 has a flange 40 with an axially projecting and preferably circumferentially continuous rib or rim 42 and a central counterbore or recess 44 which are complimentary to and in assembly engage with the shoulder and hub on one side face of each gear. Each bushing also has a central cylindrical portion 46 which in assembly is journalled for rotation in a sleeve bearing 48 which is press fit or otherwise retained in a bore 50 in the housing. To receive the shaft 14, each bushing 30 also has a through hole 52 which is preferably non-circular, preferably square, and complimentary to the shaft.

As shown in FIGS. 2 and 7, in assembly, the adjacent side faces of the gears engage the spacer ring 32. On each side this ring has an annular and axially projecting rib or rim 56 and a central counterbore 58 which in assembly mate with a shoulder and hub of each gear. To provide clearance for the shaft 14, the ring has a through clearance hole 60.

This specific construction and arrangement of the gears, bushings and spacer ring insures each tooth of the gear throughout its entire axial extent is fully supported by the underlying central body portion of the gear. Moreover, since the central body portion extends axially beyond the portion of the teeth engaging the rack it distributes the bending and other stresses to which the teeth are subjected over a larger area and a greater mass of material. Furthermore, with this construction the gears are journalled and supported for rotation by the bushings so that the forces resulting from the working loads to which they are subjected are transmitted to the hubs and central body portion of the gears, not to the teeth or outer peripheral portion of the gears. This construction also maximizes the amount of material in the central body of the gear for a given size through hole complimentary with the shaft 14. Thus, this construction and arrangement greatly increases the strength, maximum working load, durability and reliability of the gear and bushing assembly and hence the entire device. Indeed, the load capacity of this construction is 45% greater than a prior art construction of comparable size based on the British Standard Rating Formulae for gears.

FIG. 8 illustrates the construction of the device 12 which has only one actuator rack 62 which in assembly meshes with a complementary pinion gear 22 for reciprocation of the rack relative to the housing 64. The setup and operation of device 12 is essentially the same as that of device 10 and hence will not be separately described in detail.

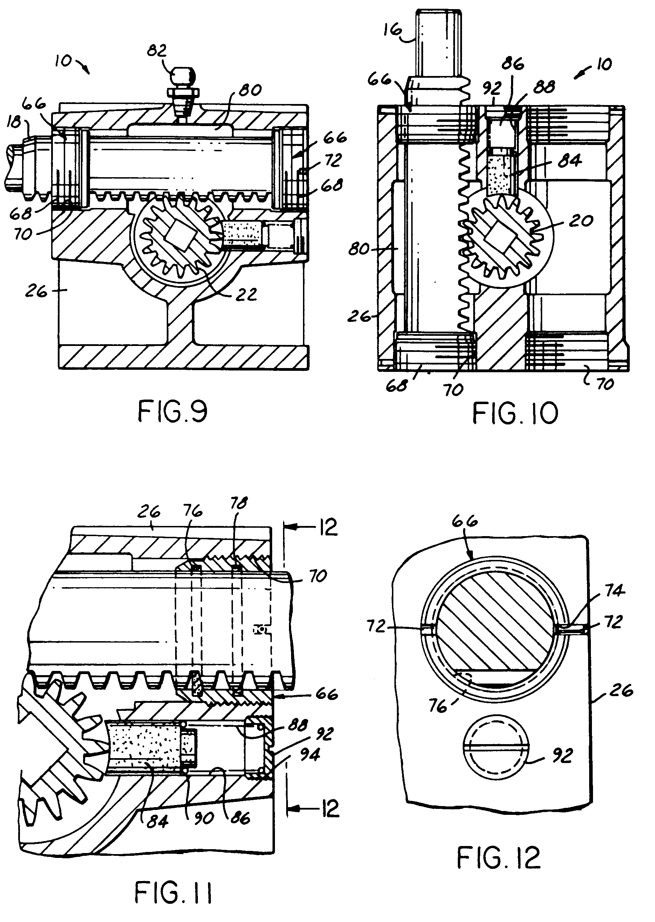

FIGS. 9-12 illustrate a modified two-actuaor device 10′ which has the same construction and operation as device 10 except for a presently preferred construction of the rack bearings and permanent lubrication of the bearings, the rack and pinion. Each actuator rack 16 and 18 is journalled by a pair of permanently lubricated bearings 66 preferably made of a hard bronze material, such as AMCO 18. Each bearing 66 is in the form of a sleeve or bushing with an external threaded portion 68 receivable in a complementarily threaded counterbore 70 in the housing 26. Each bearing 66 is releasably restrained from rotating in the counterbore by a removable roll pin 72 frictionally received in a hole in the housing and projecting into a slot 74 in the outer end face of the bearing. To provide permanent lubrication of the bearings and rack, graphite 76 is disposed in one or more recesses or grooves 78 in the inner face of the bearing. Each groove 78 opens onto the rack and is preferably circumferentially continuous. Preferably, the graphite 76 is packed and cured in the bearing grooves to provide a permanent continuous ring of solid graphite lubricant. The bearings, racks and pinions can also be lubricated by injecting grease or other lubricant into the enclosed housing cavity 80 in which they are received through an alimite fitting 82 or the like. Since in use, the actuator devices are usually disposed within dies and the like, in practice they are seldom, if ever, lubricated after being initially installed and during normal use. Therefore, it is important to provide the best permanent lubrication possible.

Additional permanent lubrication for the teeth of each pinion is provided by a body or plug 84 of graphite which is slidably received in a bore 86 in the housing and yieldably biased into engagement with the teeth by a compression spring 88. One end of the spring is received on a shoulder 90 of the graphite plug and the other end is received in a threaded retainer cap 92 removably received in a complementarily threaded housing bore 94. Preferably, the graphite plug has a hardness as determined by a Scleroscope in the range of about 30 to 40 and preferably 35. In use, as the pinion gear 20 rotates graphite from the plug is transferred to the pinion teeth to provide lubrication for the teeth of both the pinion and its associated rack. To further enhance the useful service life of this device, preferably the teeth of each rack are case hardened, such as by nitriding, to increase their resistance to wear.

In setting up the devices 10, 10′ and 12, the shaft 14 can be shifted axially to disconnect it from the pinion gears so that they can independently rotate or free wheel to permit each rack to be moved to its desired position for a given installation. After the racks are in a desired position, the pinion gears can be coupled together to rotate in unison for simultaneously actuating and operating the racks by inserting the shaft axially so that it extends through the central square opening 28 in all of the gears. Thereafter, rotation of the shaft 14 in either direction will simultaneously traverse all of the racks. If desired, in some applications, one of the racks, such as the horizontal rack 18 can be driven in either direction to rotate all the pinion gears and the shaft in unison and thereby simultaneously traverse all the remaining racks 16 & 62 in unison.

In the device 10′, as each pinion gear 20 and 22 rotates, its teeth are lubricated by graphite from the graphite plug 84 yieldably bearing thereon. Similarily, as each rack 16 and 18 moves it and its associated bearings are lubricated from the graphite 78 deposited in the grooves 76 of the bearings. Thus, device 10′ will be adequately lubricated in use and have a long in service life even if it is not periodically lubricated by injecting grease into the housing cavity 80.

## Claims

1. An actuator apparatus comprising
a housing (26),
at least a rack (16,18), which is carried in the housing for reciprocal movement relative thereto,
at least a pinion gear (20,22), the teeth (38) thereof meshing with said rack (16,18), the pinion gear having a non-circular central hole (28) therethrough,
a shaft (14) having a non-circular cross section complementary to that of said central hole (28) and being removably received therein, and
a pair of bushings (30) having a cylindrical portion (46) with a passage (52) therethrough for supporting and journalling said shaft (14) in said housing (26),
said bushings (30) being in generally opposed relation,
journaled in the housing and carrying and mounting said pinion gear (20, 22) for rotation on an axis at least substantially coincident with the axis of rotation of said bushings (30),
characterized in that
said pinion gear (20, 22) has an annular peripheral recess in each side face to form shoulder means (34) and a hub (36), said shoulder means (34) opening generally radially and axially outwardly of the gear,
each said bushing (30) has flange (40) and rim (42) portions forming a recess (44) and
in that said hub (36) of said pinion gear (20, 22) is complementary to said recess (44) of said bushing (30) and the configuration of said shoulder means (34) is complementary to said flange (40) and rim (42) portions.

2. The actuator apperatus according to claim 1, wherein the height of said peripheral recess (34) is less than the radial height of the teeth (38) of the pinion gear (20, 22) and the axial extent at the root of the teeth (34) is greater than the axial extent at the tip of the teeth (34).

3. The actuator apperatus according to claim 1 or 2, wherein said central hole (28) and said passage (52) through the bushing (30) have a square cross section complementary to the cross section of the shaft (14).

4. The actuator apperatus according to any of the claims 1 to 3,
wherein said rack (16, 18, 62) is of steel and is case hardened.

5. The actuator apperatus according to any of the claims 1 to 4,
wherein said housing (26) has sleeve bearings (48) for journalling said bushings (30).

6. The actuator apperatus according to any of the claims 1 to 4,
wherein the apparatus (10) comprises two pinion gears (20, 22), and
each bushing (30) of said pair engages with one of the two pinion gears, and wherein a spacer ring (32) having a configuration corresponding to the flange (40) and rim (42) portions of said bushing (30) is disposed between and supporting said gears (20, 22), so that when no shaft (14) is received in the central holes (28) of the pinion gears (20, 22), these gears are decoupled and rotate indepently of each other and when the shaft (14) is received in the central holes (28) of all the pinion gears, they rotate in unison.

7. The actuator apperatus according to claim 6,
wherein said spacer ring (32) has a through clearance hole (60), annular and axially projecting rims (56) and a central counterbore (58).

8. The actuator apperatus according to any of the claims 1 to 7,
wherein at least two rack-bearings (66) are carried by the housing (26) and at least one of said rack bearings (66) has at least one recess (78) therein, opening to said rack for supporting a graphite lubricant (76).

9. The actuator apperatus according to claim 8,
wherein each rack-bearing (66) has at least two axially spaced-apart and circumferentially continous recesses (78) therein opening onto its associated rack, and each said recess has a graphite lubricant (76) received therein.

10. The actuator apperatus according to claims 8 or 9,
wherein said rack bearings (66) are of hard bronze.

11. The actuator apperatus according to one of the claims 1 to 10,
wherein at least one body of graphite material (84) is carried by said housing (26) and yieldably biased into engagement with said pinion gear (20, 22) to bear on the teeth (38) thereof when rotated relative thereto for lubrication thereof.

12. The actuator apperatus according to one of the claims 8 to 11,
wherein said housing (26) has a cavity (80) enclosing each said pinion gear (20,22) and at least that portion of said rack (16, 18) which is disposed between said bearings, and a lubricant fitting (82) is carried by said housing (26), communicating with said cavity (80) and constructed and arranged to permit a grease or other flowing lubricant to be injected into said cavity (80) through said fitting.

## Patentansprüche

1. Betätigungsvorrichtung mit folgenden Merkmalen: ein Gehäuse (26),
mindestens eine Zahnstange (16,18), die in dem Gehäuse zur Hin- und Herbewegung relativ zu diesem geführt ist,
mindestens ein Zahnstangenzahnrad (20,22), deren Zähne (38) mit der Zahnstange (16,18) kämmen, wobei das Zahnrad eine zentrale Bohrung (28) mit nicht kreisförmigem Querschnitt aufweist,
eine Welle (14) mit nicht kreisförmigem Querschnitt komplementär zu dem der zentralen Bohrung (28), wobei die Welle in der Bohrung entfernbar aufgenommen wird, und
zwei Buchsen (30), welche einen zylindrischen Teil (46) mit einem Durchlaß (52) zur Stützung und Lagerung der Welle (14) in dem Gehäuse (26) aufweisen, wobei die Buchsen (30) sich im großen und ganzen gegenüberstehen, in dem Gehäuse gelagert sind und das Zahnrad (20,22) zur Drehung um eine Achse tragen und lagern, die mindestens im wesentlichen mit der Drehachse der Buchsen (30) zusammenfällt,
dadurch gekennzeichnet, daß
das Zahnrad (20,22) eine ringförmige Randaussparung an jeder Seitenfläche zur Bildung von Schultereinrichtungen (34) und einer Nabe (36) aufweist, daß die Schultereinrichtung (34) sich im wesentlichen radial und axial nach außen zu dem Zahnrad öffnet, daß die jeweilige Buchse (30) als Flansch (40) und als Rand (42) ausgebildete Teile zur Bildung einer Aussparung (44) aufweist, und daß die Nabe (36) des Zahnrads (20,22) komplementär zu der Aussparung (44) der Buchse (30) ausgebildet ist und die Konfiguration der Schultereinrichtung (34) komplementär zu den von dem Flansch (40) und dem Rand (42) gebildeten Teilen ist.

2. Betätigungsvorrichtung nach Anspruch 1, bei der die Höhe der Randaussparung (34) geringer als die radiale Höhe der Zähne (38) des Zahnrades (20,22) und die axiale Erstreckung der Wurzel der Zähne (34) größer als die axiale Erstreckung der Zahnköpfe (34) ist.

3. Betätigungsvorrichtung nach Anspruch 1 oder 2, bei der die zentrale Bohrung (28) und der Durchlaß (52) durch die Buchse (30) einen Rechteckquerschnitt komplementär zum Rechteckquerschnitt der Welle (14) aufweisen.

4. Betätigungsvorrichtung nach einem der Ansprüche 1 bis 3, worin die Zahnstange (16,18,62) aus Stahl besteht und einsatzgehärtet ist.

5. Betätigungsvorrichtung nach einem der Ansprüche 1 bis 4, bei der das Gehäuse (26) hülsenförmige Lager (48) zur Lagerung der Buchsen (30) aufweist.

6. Betätigungsvorrichtung nach einem der Ansprüche 1 bis 4, welche zwei Zahnstangen-Zahnräder (20,22) aufweist und jede Buchse (30) des Paares in Eingriff mit einem der beiden Zahnräder steht, und worin ein Abstandsring (32) mit einer Konfiguration entsprechend den aus Flansch (40) und Rand (42) bestehenden Teilen der Buchse (30) zwischen den Zahnrädern (20,22) angeordnet ist und diese stützt, so daß, wenn keine Welle (14) in den zentralen Bohrungen (28) der Zahnräder (20,22) aufgenommen ist, diese Zahnräder voneinander entkoppelt sind und unabhängig voneinander sich drehen, und wenn die Welle (14) in den zentralen Bohrungen (28) aller Zahnräder aufgenommen wird, diese gemeinsam sich drehen.

7. Betätigungsvorrichtung nach Anspruch 6, bei der der Abstandsring (32) eine durchgehende Abstands-Bohrung (60), ringförmige und axial vorstehende Ränder (56) und einen Stufenbohrungsteil (58) aufweist.

8. Betätigungsvorrichtung nach einem der Ansprüche 1 bis 7, bei der mindestens zwei Zahnstangenlager (66) von dem Gehäuse (26) getragen werden und mindestens ein Zahnstangenlager (66) mindestens eine Aussparung (78) aufweist, die sich zu der Zahnstange hin öffnet und zur Aufnahme eines Graphit enthaltenden Schmiermittels (76) dient.

9. Betätigungsvorrichtung nach Anspruch 8, bei der jedes Zahnstangenlager (66) mindestens zwei axial im Abstand angeordnete und in Umfangsrichtung durchgehend ausgebildete Aussparungen (78) aufweist, die zu der zugeordneten Zahnstange hin münden, und worin jede Aussparung ein entsprechendes Graphit-Schmiermittel (78) aufnimmt.

10. Betätigungssvorrichtung nach Ansprüchen 8 oder 9, bei der die Zahnstangenlager (66) auf Hartbronze bestehen.

11. Betätigungsvorrichtung nach einem der Ansprüche 1 bis 10, bei der mindestens ein Graphitmaterialkörper (84) in dem Gehäue (26) gehalten wird und in Eingriff mit den Zahnstangen-Zahnrädern (20,22) nachgiebig gedrängt wird, um sich auf den Zähnen (38) abzustützen und diese zu schmieren, wenn eine relative Drehung zu diesen stattfindet.

12. Betätigungsvorrichtung nach einem der Ansprüche 8 bis 11, bei der das Gehäuse (26) einen Hohlraum (80) aufweist, der das jeweilige Zahnrad (20,22) und mindestens den Teil der Zahnstange (16,18) umschließt, der zwischen den Lagern angeordnet ist, und bei welcher Betätigungsvorrichtung ein Schmiernippel (82) von dem Gehäuse (26) getragen wird, der mit dem Hohlraum (80) in Verbindung steht und so ausgebildet und angeordnet ist, daß Fett oder ein anderes fließfähiges Schmiermittel in den Hohlraum (80) durch den Nippel injiziert werden kann.

## Revendications

1. Dispositif d'actionnement comprenant :
un boîtier (26),
au moins une crémaillère (16, 18), qui est supportée dans le boîtier pour aller et venir relativement à celui-ci,
au moins un pignon (20, 22), dont les dents (38) s'engrènent avec ladite crémaillère (16, 18), le pignon comportant un orifice central non-circulaire (28) en son sein,
un arbre (14) ayant une section transversale non circulaire complémentaire de celle dudit orifice central (28) et étant reçu avec possibilité d'enlèvement au sein de ce dernier, et
une paire de douilles (30) comportant une portion cylindrique (46) avec un passage (52) en son sein pour supporter et monter sur palier ledit arbre (14) dans ledit boîtier (26),
lesdites douilles (30) étant généralement opposées, montées sur palier dans le boîtier et supportant et montant ledit pignon (20, 22) à rotation sur un axe coïncidant au moins sensiblement avec l'axe de rotation desdites douilles (30),
caractérisé en ce que
ledit pignon (20, 22) comporte un évidement périphérique annulaire dans chaque face latérale pour former un épaulement (34) et un moyeu (36), ledit épaulement (34) s'ouvrant généralement radialement et axialement vers l'extérieur du pignon,
chacune desdites douilles (30) comporte des portions de rebord (40) et bordure (42) formant un évidement (44) et
en ce que ledit moyeu (36) dudit pignon (20, 22) est complémentaire dudit évidement (44) de ladite douille (30) et la configuration dudit épaulement (34) est complémentaire de celle desdites portions de rebord (40) et bordure (42).

2. Dispositif d'actionnement selon la revendication 1, dans lequel la hauteur dudit évidement périphérique (34) est inférieure à la hauteur radiale des dents (38) du pignon (20, 22) et l'étendue axiale à la racine des dents (38) est supérieure à l'étendue axiale au sommet des dents (38).

3. Dispositif d'actionnement selon la revendication 1 ou 2, dans lequel ledit trou central (28) et ledit passage (52) dans la douille (30) ont une section transversale carrée complémentaire de la section transversale de l'arbre (14).

4. Dispositif d'actionnement selon l'une quelconque des revendications 1 à 3, dans lequel ladite crémaillère (16, 18, 62) est en acier et est cémenté.

5. Dispositif d'actionnement selon l'une quelconque des revendications 1 à 4, dans lequel ledit boîtier (26) comporte des paliers à douilles (48) pour monter sur palier lesdites douilles (30).

6. Dispositif d'actionnement selon l'une quelconque des revendications 1 à 4, dans lequel le dispositif (10) comprend deux pignons (20,22), et
chaque douille (30) de ladite paire s'engage avec un des deux pignons, et dans lequel un anneau d'espacement (32) ayant une configuration correspondant aux portions de rebord (40) et bordure (42) de ladite douille (30) est disposé entre et supportant lesdits pignons (20, 22), de manière que lorsqu'aucun arbre (14) n'est reçu dans les orifices centraux (28) des pignons (20, 22), ces pignons soient découplés et tournent indépendamment l'un de l'autre et lorsque l'arbre (14) est reçu dans les orifices centraux (28) de tous les pignons, ils tournent à l'unisson.

7. Dispositif d'actionnement selon la revendication 6, dans lequel ledit anneau d'espacement (32) comporte un trou de dégagement traversant (60), des bordures annulaires et se projetant axialement (56) et un logement cylindrique central (58).

8. Dispositif d'actionnement selon l'une quelconque des revendications 1 à 7, dans lequel au moins deux paliers à crémaillère (66) sont supportés par le boîtier (26) et au moins un desdits paliers à crémaillère (66) comporte au moins un évidement (78) en son sein, s'ouvrant sur ladite crémaillère pour supporter un lubrifiant de graphite (76).

9. Dispositif d'actionnement selon la revendication 8, dans lequel chaque palier à crémaillère (66) comporte au moins deux évidements (78) continus circonférentiellement et espacés axialement en son sein, s'ouvrant sur la crémaillère qui lui est associée, et chacun desdits évidements comporte un lubrifiant de graphite (76) reçu en son sein.

10. Dispositif d'actionnement selon la revendication 8 ou 9, dans lequel lesdits paliers à crémaillère (66) sont en bronze dur.

11. Dispositif d'actionnement selon l'une des revendications 1 à 10, dans lequel au moins un corps de graphite (84) est supporté par ledit boîtier (26) et sollicité élastiquement en engagement avec ledit pignon (20, 22) pour porter sur les dents (38) de celui-ci lorsqu'il est tourné relativement à ce dernier afin de le lubrifier.

12. Dispositif d'actionnement selon l'une des revendications 8 à 11, dans lequel ledit boîtier (26) comporte une cavité (80) enfermant chacun desdits pignons (20, 22) et au moins la portion de ladite crémaillère (16, 18) qui est disposée entre lesdits paliers, et une garniture de graphite (82) est supportée par ledit boîtier (26), communiquant avec ladite cavité (80) et construite et agencée pour permettre à une graisse ou à un autre lubrifiant d'être injecté dans ladite cavité (80) via ladite garniture.
